# EUROPEAN PATENT APPLICATION

(11) **EP 2 372 601 A1**
(43) Date of publication of application: **05.10.2011**
(21) Application number: 11159512.0
(22) Date of filing: 24.03.2011
(51) Int. Cl.: G06K 7/00, G06K 19/07

(54) **An RFID reader and method for programming an RFID reader**

(30) Priority: 30.03.2010 FI 20105319
(71) Applicant: Idesco Oy, 90570 Oulu (FI)
(72) Inventor: Koistinen, Paula, 90570 Oulu (FI); Polvela, Juha, 90120 Oulu (FI)
(74) Representative: Söderman, Lisbeth Karin

(57) **Abstract**

First aspect of the invention is an RFID reader comprising memory means to store information and communication means to transmit and receive radio frequency signals. The RFID reader is characterized in that the RFID reader is configured to receive a command script by said communication means, store said command script to said memory means and execute said command script.

## Description

### TECHNICAL FIELD OF INVENTION

The invention relates to an RFID reader which can be programmed with an RFID programming device. The invention also relates to an RFID programming device for programming an RFID reader. The invention also relates to a method for programming an RFID reader with an RFID programming device. The invention also relates to a system comprising an RFID reader and an RFID programming device.

### BACKGROUND OF THE INVENTION

Today, RFID readers are widely used for access control systems, security systems and identification systems. A person or a unit carrying an RFID device, commonly known as an RFID tag or RFID card, can be identified by an RFID reader by introducing the RFID device to the RFID reader.

A typical independent RFID reader searches RFID device based on a static internal structure that functions without constant monitoring by the RFID system the reader belongs to. In most modern RFID readers, e.g. access control readers, this internal structure can be configured with an input of new parameters to be stored into the reader's memory.

Configuration can be done either by sending configuration commands via serial communication channel or by using configuration cards. When the configuration cards are used all the parameters are read out from a special configuration card and then sent to a reader vie RFID interface. For example, a reader can be configured to change reader output format, output timings, security keys, etc. A reader can also be configured to use, for example, different frequency, modulation, protocol, power level or to change some other parameter related to the RFID interface. However, versatility of functions increases the number of needed parameters and therefore increases complexity of the internal structure.

International patent application WO2006/088770 discloses techniques to configure radio-frequency identification readers. A system, method and apparatus are disclosed for a purpose of modifying or restoring the configuration of an RFID reader without prior knowledge of the configuration information of the reader. The configuration can be performed by introducing an RFID device to proximity of the configurable reader, as disclosed in the patent document.

### OBJECT OF THE INVENTION

The object of the present invention is to provide a programmable RFID reader, an RFID programming device and a method for programming an RFID reader.

### SUMMARY OF THE INVENTION

First aspect of the invention is an RFID reader comprising memory means to store information and communication means to transmit and receive radio frequency signals. The RFID reader is characterized in that the RFID reader is configured to receive a command script by said communication means, store said command script to said memory means and execute said command script.

In an embodiment of the invention the RFID reader is configured to receive multiple command scripts by the communication means, store said command scripts to the memory means and execute said command scripts in predetermined order until one of said command scripts is successfully executed. In an embodiment of the invention the RFID reader is configured to transmit a first radio frequency signal to activate an RFID programming device to transmit a second radio frequency signal comprising one or more command scripts, which the RFID reader is configured to receive by the communication means, store said one or more command scripts to the memory means and execute said one or more command scripts.

Second aspect of the invention is an RFID programming device comprising memory means to store information and communication means to transmit and receive radio frequency signals. The RFID programming device is characterized in that the memory means are configured to store at least one command script, the communication means are configured to receive a first radio frequency signal and configured to transmit a second radio frequency signal in response to the first radio frequency signal, the second radio frequency signal comprising at least one command script from memory means.

In an embodiment of the invention the communication means of the RFID programming device are configured to receive and exploit electromagnetic energy of radio frequency signals to power said RFID programming device.

In an embodiment of the invention said first radio frequency signal is an interrogation signal from an RFID reader.

Third aspect of the invention is a method for programming an RFID reader with an RFID programming device. The method is characterized in that the method comprises following steps:
- the RFID reader transmitting an interrogation signal to the RFID programming device;
- the RFID programming device receiving the interrogation signal and transmitting a second signal comprising at least one command script to the RFID reader in response to the interrogation signal;
- the RFID reader receiving the second signal and storing said at least one command script to memory means; and
- the RFID reader executing said received and stored at least one command script.

Fourth aspect of the invention is a system comprising an RFID reader of the first aspect of the invention and an RFID programming device of the second aspect of the invention.

Fifth aspect of the invention is a software program product on a computer readable medium comprising means for executing the method of the third aspect of the invention when run in a microprocessor.

Embodiments of the invention are combinable in suitable part.

Some embodiments of the invention are described herein, and further applications and adaptations of the invention will be apparent to those of ordinary skill in the art.

### BRIEF DESCRIPTION OF DRAWINGS

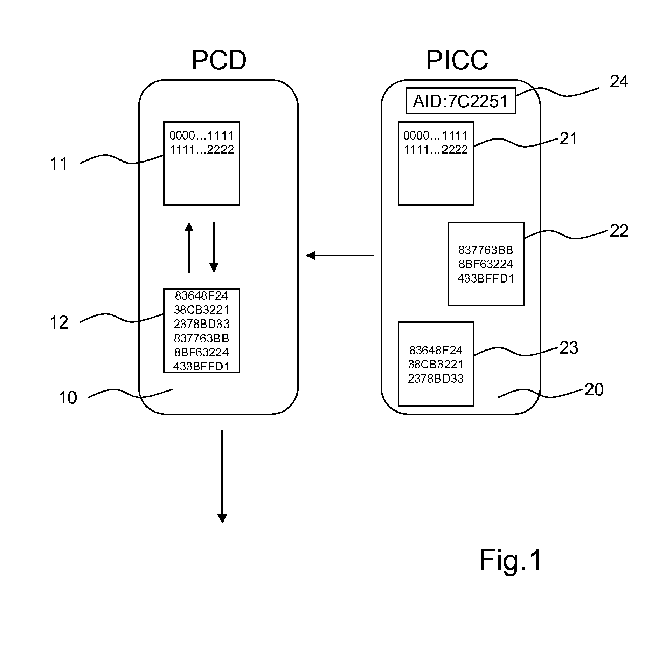

In the following, the invention is described in greater detail with reference to the accompanying drawings in which
Figure 1 illustrates internal structures of an RFID reader and an RFID programming device according to an embodiment of the invention.

### DETAILED DESCRIPTION OF THE DRAWINGS

Figure 1 illustrates internal structures of an RFID reader and an RFID programming device according to an embodiment of the invention. In the embodiment, a proximity coupling device (PCD), i.e. an RFID reader (10), comprises first memory means (11) for storing DESfire keys and second memory means (12) for storing other parameters. A proximity integrated circuit card (PICC), i.e. an RFID programming device (20), comprises a first file (21) comprising DESfire keys, a second file (22) comprising one or more command scripts and a third file (23) comprising other parameters.

Conventionally, readers have certain pre-defined parameters that can be set and/or written to certain values. This is considered here as configuring a reader to a new mode of operation. When command scripts are used, readers are configured to execute commands which are supported by the protocol in any case, because these commands are needed for normal communications of the reader. The commands can form one or more command scripts or be a part of one or more command scripts, which can be executed in the PCD. The commands can be for example in hexadecimal or ascii format, and those commands perform one lower level task according to given parameters. The command scripts can be configured to perform for example read commands, write commands, output control commands, etc. A script comprises a number of these commands in a predetermined order.

The second file (22) i.e. a command file may have for example a following structure. The command file comprises one or more command scripts and a header that indicates the structure of the command file. The command file has preferably a checksum or some other method for verifying integrity of the file for example after it has been transferred to a reader. Said one or more command scripts comprise one or more commands. A command controls a lower level operation and therefore a command script controls a series of lower level operations.

Programming of the PCD (10) can be initiated by introducing the programming device, for example a PICC (20), to the reading area of the PCD, for example after PCD power up. During the programming process, all the necessary files are sent from the PICC to the PCD. The command scripts in the second file (22) are also transferred and stored to the PCD. All the files in the PICC are preferably encrypted with a secret key. In this case, said secret key is also stored to the PCD, which uses the key to decrypt the encrypted files after receiving one or more of the files. When a file comprising one or more command scripts is received and encrypted by the PCD, the encrypted command scripts are stored to the second memory means. The stored command scripts may be used when the PCD is polling for nearby PICCs. The command scripts are executed when the PCD finds a compatible PICC from the reading field.

The PCD may contain multiple sets of command strings, i.e. command scripts, to be executed in a predetermined order until one of the scripts can be completed successfully. If a command in a first command script can not be executed, the execution of the first command script is aborted and execution of a second command script is initiated. If the execution of the second command script also fails, then execution of a third command script is initiated and so on. This will continue until all commands of one command script can be completed successfully or until all the command scripts have been tried. This can be done independently within the PCD without a connection to a server. In case one of the command scripts is executed successfully, data from PICC is read to PCD and forwarded to the system and the following command scripts are not executed.

In the following, some programming examples are presented. The examples are intended for illustrative purposes only and do not limit the scope of the invention in any way.

### Example 1:

Readers (for example access control readers) can be programmed to function at different security levels as follows:
Security level 1: A facility is to be accessed with an RFID tag comprising a certain directory structure and keying. The reader in question is programmed to execute a command script having said directory structure and keying.
Security level 5: A facility is to be accessed with an RFID tag comprising a certain directory structure which requires authentication of five different keys. Command script is used for creating the required operations model to the reader in question.

After an RFID tag has been introduced to the reader, the reader's type of action depends only of the command script which the reader executes. In this example, the command scripts define different security levels. Only those RFID tags in which the whole command script can be executed are able to open the door or perform some other function. Therefore a security level 5 tag can be used to access the security level 1 facility, but a level 1 tag can not provide access to the level 5 facility since the level 1 tag has only one keying and five keys are needed to successfully execute the command script of the level 5 reader.

The command script programming can also be used with so called stand-alone readers having for example a door control output. When the stand-alone reader is set to execute certain command script, the reader opens the lock of the door in question if the command script can be executed completely and successfully with a provided tag. The command script itself can also control the door control output to open the lock for a certain period of time if it has for example following structure: *Select application 001122. Authenticate with TDES key 1. Set output 1 active. Wait 3 seconds. Set output 1 inactive.*

### Example 2:

Description of operations: Data to be read is coded to application 001122 file 1. Key number 1 is used for data reading. Data length is 4 bytes and it is coded to four first bytes in the file 1. Encryption method is TDES Native. UID number needs to be blocked out.

Command script: Select application 001122. Authenticate PICC key number 1 with TDES Native encryption method. Read file 1 with offset 000 and data length 4.

PICC (programming card) interface file: Set "send serial number" parameter to "off" state.

PCD (reader) programming: Introduce PICC to the PCD reading field. If PICC authentication key and PCD programming key match then new parameters are stored into the PCD. Previous program configuration is removed from the PCD and new rules apply after resetting the PCD.

PCD operation: The PCD sends out first four data bytes from file 1 application 001122 if the command string rules can be executed. PICCs without correct application and/or correct keys can not be read.

### Example 3:

Description of operations: First part of the data is coded to application 001122 file 1. Key number 1 is used for data reading. Data length is 4 bytes and it is coded to four first bytes in the file 1. Encryption method is TDES Native. Second part of the data is coded to application 334455 to file 2. Key number 2 is used for data reading. Data length is 4 bytes and it is coded to bytes 4-7 inside the file. Encryption method is TDES Native. Needed data output is 66 bits, i.e. 8 data bytes + parity bits. Tamper needs to be sent out when reader is removed from the wall. UID number needs to be blocked out.

Command script: Select application 001122. Authenticate PICC key number 1 with TDES Native encryption method. Read file 1 with offset 000 and data length 4. Select application 334455. Authenticate PICC key number 2 with TDES Native encryption method. Read file 2 with offset 003 and data length 4.

PICC (programming card) interface file: Set "send serial number" parameter to "off" and tamper to "on" state.

PCD (reader) programming: Introduce PICC to the PCD reading field. If PICC authentication key and PCD programming key match then new parameters are stored into the PCD. Previous program configuration is removed from the PCD and new rules apply after resetting the PCD.

PCD operation: The PCD sends out 66 bits of data if the command string rules can be executed. First four bytes are read out from the application 001122 and last four bytes from application from 334455. Reader adds parity bits to the data string. Cards without correct applications and/or correct keys can not be read. The PCD is also blocking the PICCs which do not comprise both of the applications and files. Tamper data is sent out.

To a person skilled in the art, the foregoing exemplary embodiments illustrate the model presented in this application whereby it is possible to design different methods and arrangements, which in obvious ways to the expert, utilize the inventive idea presented in this application.

## Claims

1. An RFID reader comprising memory means to store information and communication means to transmit and receive radio frequency signals, **characterized in that** the RFID reader is configured to receive a command script by said communication means, store said command script to said memory means and execute said command script.

2. An RFID reader according to claim 1, **characterized in that** the RFID reader is configured to receive multiple command scripts by the communication means, store said command scripts to the memory means and execute said command scripts in predetermined order until one of said command scripts is successfully executed.

3. An RFID reader according to claim 1 or 2, **characterized in that** the RFID reader is configured to transmit a first radio frequency signal to activate an RFID programming device to transmit a second radio frequency signal comprising one or more command scripts, which the RFID reader is configured to receive by the communication means, store said one or more command scripts to the memory means and execute said one or more command scripts.

4. An RFID programming device comprising memory means to store information and communication means to transmit and receive radio frequency signals, **characterized in that** the memory means are configured to store at least one command script, the communication means are configured to receive a first radio frequency signal and configured to transmit a second radio frequency signal in response to the first radio frequency signal, the second radio frequency signal comprising at least one command script from memory means.

5. An RFID programming device according to claim 4, **characterized in that** the communication means are configured to receive and exploit electromagnetic energy of radio frequency signals to power said RFID programming device.

6. An RFID programming device according to claim 4 or 5, **characterized in that** said first radio frequency signal is an interrogation signal from an RFID reader.

7. A method for programming an RFID reader with an RFID programming device, **characterized in that** the method comprises steps of:
- the RFID reader transmitting an interrogation signal to the RFID programming device;
- the RFID programming device receiving the interrogation signal and transmitting a second signal comprising at least one command script to the RFID reader in response to the interrogation signal;
- the RFID reader receiving the second signal and storing said at least one command script to memory means; and
- the RFID reader executing said received and stored at least one command script.

8. A system comprising an RFID reader of claim 1 and an RFID programming device of claim 4.

9. A software program product on a computer readable medium comprising means for executing the method of claim 7 when run in a microprocessor.
